# EUROPÄISCHE PATENTSCHRIFT

(11) **EP 3 142 883 B1**
(45) Veröffentlichungstag und Bekanntmachung des Hinweises auf die Patenterteilung: **08.05.2019**
(21) Anmeldenummer: 15711702.9
(22) Anmeldetag: 16.03.2015
(51) Int. Cl.: B60K 1/00, B60K 7/00

(54) **INTEGRATION EINER ELEKTROMOTORENEINHEIT IN EIN GETRIEBEGEHÄUSE**
INTEGRATION OF AN ELECTRIC-MOTOR UNIT INTO A TRANSMISSION HOUSING
INTÉGRATION D'UN ENSEMBLE MOTEUR ÉLECTRIQUE DANS UN CARTER DE TRANSMISSION

(30) Priorität: 12.05.2014 DE 102014208867
(43) Veröffentlichungstag der Anmeldung: 22.03.2017
(73) Patentinhaber: Robert Bosch GmbH, 70442 Stuttgart (DE)
(72) Erfinder: KERN, Denis, 70190 Stuttgart-Ost (DE); PETER, Ralph, 74348 Lauffen (DE)
(86) Internationale Anmeldenummer: PCT/EP2015/055449
(87) Internationale Veröffentlichungsnummer: WO 2015/172914

(56) Entgegenhaltungen:
- EP-A1- 1 571 751
- EP-A1- 2 602 509
- EP-A2- 1 142 743
- WO-A1-2013/176107
- US-A- 5 295 413
- US-A1- 2009 250 272
- US-A1- 2010 320 849

## Beschreibung

### Gebiet der Erfindung

Die Erfindung betrifft elektrische Antriebe oder Hybridantriebe für Kraftfahrzeuge. Insbesondere betrifft die Erfindung eine Antriebseinheit für ein Kraftfahrzeug mit einem Getriebe und einer Elektromotoreneinheit.

### Stand der Technik

Zum Antrieb von Kraftfahrzeugen werden zunehmend elektrische Motoren verwendet, die beispielsweise entweder ausschließlich oder auch in Kombination mit einem herkömmlichen Verbrennungsmotor eine Antriebsleistung zum Antrieb eines Kraftfahrzeugs bereitstellen.

EP 1 571 751 zeigt eine Antriebseinheit (Abbildung 1) geeignet für ein Kraftfahrzeug, aufweisend ein Getriebe (3, 4); ein Getriebegehäuse (7, 8, 9); eine Elektromotoreneinheit (1) mit einem Stator und einem Rotor; wobei das Getriebegehäuse einen Innenraum aufweist,wobei das Getriebe (12) in dem Innenraum aufgenommen ist; die Elektromotoreneinheit (1) in dem Innenraum des Getriebegehäuses angeordnet ist und das Getriebe derart ausgestaltet ist, dass die Elektromotoreneinheit (1) mit einem Antriebsstrang (10) des Kraftfahrzeuges koppelbar ist.

Im Stand der Technik sind eine Vielzahl elektrischer Antriebe und Hybridantriebe beschrieben. Hierbei werden beispielsweise eine elektrische Maschine und/oder ein Verbrennungsmotor über ein Getriebe mit einem Antriebsstrang eines Fahrzeuges gekoppelt. Das Getriebe kann hierbei dazu dienen, geeignete Drehmomente und Umdrehungszahlen bereitzustellen bzw. ineinander umzusetzen. Hierzu können in vielen Fällen die elektrische Maschine und ein Getriebe in einem Motorraum nebeneinander oder in direkter räumlicher Nachbarschaft angeordnet sein.

Hierbei kann neben einer geeigneten Übertragung der Drehmomente oder Kräfte vom Motor zu einer Antriebsachse auch eine Schmierung der betreffenden Komponenten von Bedeutung sein. Je nach Ausführungsart des Getriebes bzw. der elektrischen Maschine können Maßnahmen zur Schmierung sowohl der elektrischen Maschine als auch des Getriebes oder Teile des Getriebes notwendig sein.

Ein weiterer Aspekt kann in der Zuverlässigkeit und Wartungsfreundlichkeit der verschiedenen Komponenten einer Antriebseinheit gesehen werden. Bei modernen Fahrzeugen kann es beispielsweise wichtig sein, dass Komponenten einfach gewartet werden können und bei beispielsweise einem Defekt mit möglichst geringem zeitlichen Aufwand und Werkzeugeinsatz austauschbar sind. Gleichzeitig werden zunehmend kompakte Bauformen und platzsparende Varianten insbesondere für kleinere Kraftfahrzeuge gefordert.

### Offenbarung der Erfindung

Ausführungsformen der Erfindung können vorteilhaft eine Zuverlässigkeit einer Motor-Getriebe-Anordnung eines Kraftfahrzeugs erhöhen und/oder einen Aufwand für Herstellung und/oder Wartung verringern.

Ausführungsformen der weiter unten beschriebenen Erfindung liegen unter anderem die folgenden Überlegungen zugrunde:
Bisher werden, wie bereits oben aufgezeigt, ein Getriebe und eine elektrische Maschine separat gefertigt und bei der Montage des Kraftfahrzeugs zu einer Antriebseinheit miteinander verbunden bzw. gekoppelt. Das Getriebe und die elektrische Maschine bilden dabei allgemein auch im montierten Zustand in dem Fahrzeug zwei separate Einheiten.

Um eine kompaktere und platzsparendere Antriebseinheit zu schaffen, wird vorgeschlagen, die elektrische Maschine in ein Getriebe zu integrieren. Mit anderen Worten könnten die einzelnen Komponenten der elektrischen Maschine, wie beispielsweise ein Rotor und ein Stator, im und am Getriebegehäuse so angeordnet werden, dass eine einwandfreie Funktion der elektrischen Maschine auch im Inneren eines Getriebegehäuses sichergestellt werden kann. Hierbei werden die einzelnen Maschinenkomponenten entsprechend zueinander angeordnet.

Einen größeren Aufwand könnte hierbei allerdings ein möglicher notwendiger Austausch von Komponenten der elektrischen Maschine erfordern sowie eine Prüfung oder Funktionstests der elektrischen Maschine im Getriebegehäuse.

Daher kann es vorteilhaft sein, die elektrische Maschine als Einheit auszugestalten und diese vorab, d.h. vor einer Montage in dem Getriebegehäuse, als Einheit zusammenzubauen. Mit anderen Worten kann die elektrische Maschine als eigenständige vormontierte funktionsfähige und getestete Einheit behandelt werden.

Dies kann unter anderem vorteilhaft sein, weil die elektrische Maschine in einem separaten Herstellungsprozess unter definierten Bedingungen montiert und getestet werden kann, um eine einwandfreie Funktion bereits vor dem Einbau in ein Kraftfahrzeug bzw. eine Antriebseinheit sicherstellen zu können. Während des Einbaus in das Getriebegehäuse ist somit keine weitere Veränderung an wesentlichen Komponenten der elektrischen Maschine notwendig.

Es wird daher gemäß einem Aspekt der Erfindung eine Antriebseinheit für ein Kraftfahrzeug vorgeschlagen, das ein Getriebe, ein Getriebegehäuse und eine Elektromotoreneinheit mit einem Stator und einem Rotor aufweist. Das Getriebegehäuse ist dazu ausgestaltet, einen Innenraum des Getriebegehäuses hermetisch dicht zu umgeben, wobei das Getriebe in dem Innenraum des Getriebegehäuses aufgenommen ist. Die Antriebseinheit ist dadurch gekennzeichnet, dass die Elektromotoreneinheit in dem Innenraum des Getriebegehäuses angeordnet ist und das Getriebe dazu ausgestaltet ist, die Elektromotoreneinheit mit einem Antriebsstrang des Kraftfahrzeuges zu koppeln.

Unter einer Elektromotoreneinheit kann hierbei eine elektrische Maschine verstanden werden, die als funktionierende, zusammenhängende Funktionseinheit betrachtet werden kann. Insbesondere sind dabei die verschiedenen Komponenten des Elektromotors mechanisch miteinander verbunden bzw. angeordnet, so dass die Elektromotoreneinheit beispielsweise als eine eigenständige Baugruppe montierbar ist.

Ein Vorteil einer solchen Antriebseinheit kann darin gesehen werden, dass eine solche Elektromotoreneinheit zum einen innerhalb des Getriebegehäuses angeordnet ist und somit eine kompaktere und kleinere Bauform der gesamten Antriebseinheit ermöglichen kann. Weiterhin ist die Elektromotoreneinheit bereits vor dem Einbau in das Getriebegehäuse prüfbar und kann somit eine Qualität und Zuverlässigkeit der Antriebseinheit erhöhen. Weiterhin kann durch eine Montage einer Elektromotoreneinheit in einem separaten Herstellungsprozess auf das aufwändige Montieren oder Demontieren von Einzelteilen der Elektromotoreneinheit im Getriebegehäuse verzichtet werden. Beispielsweise kann dies einen einfacheren Austausch des Elektromotors ermöglichen, indem statt verschiedener Einzelteile nur noch die gesamte Elektromotoreneinheit ausgetauscht wird.

Das Getriebe kann hierbei beispielsweise ein bekanntes Getriebe sein, wie es beispielsweise typischerweise in einem Antriebsstrang eines Kraftfahrzeugs eingesetzt wird und bei dem eine Kraft- bzw. Drehmomentübertragung mittels Zahnrädern und Achsen erfolgt.

In einer Ausführungsform ist die Elektromotoreneinheit als Einheit arbeitsfähig und als Einheit aus dem Getriebegehäuse entnehmbar. Ein Vorteil kann darin gesehen werden, dass die Elektromotoreneinheit unabhängig von einem Getriebe hergestellt und vollständig geprüft werden kann, was einen Aufwand bei der Montage oder bei der Wartung eines Kraftfahrzeuges verringern kann. So kann beispielsweise im Fall eines Fehlers oder Defekts der Elektromotoreneinheit die gesamte Elektromotoreneinheit als Ganzes in nur wenigen Arbeitsschritten aus dem Getriebegehäuse entnommen werden und gegebenenfalls mit einer Ersatzantriebseinheit ersetzt werden. Ein weiterer Vorteil kann sein, dass die Herstellungs- oder Montageprozesse des Getriebes und der Elektromotoreneinheit separat gehalten werden können, was organisatorische und fertigungstechnische Vorteile haben kann.

In einer Ausführungsform weist das Innere des Getriebegehäuses ein Schmiermedium zum Schmieren des Getriebes auf. Das Getriebegehäuse und die Elektromotoreneinheit sind derart ausgestaltet, dass ein Schmieren der Elektromotoreneinheit mithilfe des Schmiermediums erfolgt. Beispielsweise kann im Getriebegehäuse ein Getriebeöl eingebracht sein, das gleichzeitig zum Schmieren der Elektromotoreneinheit genutzt werden kann. Hierzu können beispielsweise kleine Öffnungen an einer Außenseite der Elektromotoreneinheit vorgesehen sein, durch die Schmiermittel dosiert in bestimmte Bereiche der Elektromotoreneinheit gelangen kann. Ein Vorteil kann darin gesehen werden, dass anstatt separater Schmiermedien und entsprechend notwendiger Dichtungen nur noch das Getriebegehäuse abzudichten ist, was einen Aufwand für das Abdichten der Antriebseinheit im Hinblick auf Schmiermedien verringern kann.

In einer Ausführungsform der Erfindung sind das Getriebegehäuse und die Elektromotoreneinheit derart ausgestaltet, dass das Schmiermedium der Elektromotoreneinheit in axialer Richtung des Rotors zugeführt wird. Mit anderen Worten erfolgt eine Zuleitung von beispielsweise Getriebeöl über eine stirnseitige Zuführung in einer Antriebswelle der Elektromotoreneinheit. Dadurch kann eine radiale Ölkühlung bei axialer Ölzuführung ermöglicht werden. Beispielsweise kann eine Antriebswelle des Rotors in Längsrichtung Hohlräume aufweisen, durch die das Schmiermedium transportiert und gegebenenfalls über Öffnungen in die zu schmierenden Bereiche der Elektromotoreneinheit verteilt werden kann.

Gemäß der Erfindung ist die Elektromaschine mit einer Kante einer ersten Stirnfläche der Elektromaschine am Getriebegehäuse befestigt. Diese Stirnfläche ist beispielsweise durch einen Flanschabschnitt des Gehäuses der Elektromaschine gebildet. Dies kann den Vorteil haben, dass eine Befestigung der Elektromotoreneinheit innerhalb des Getriebegehäuses an einem von außen zugänglichen Bereich stabil mit vergleichsweise geringem Aufwand befestigt werden kann.

Gemäß der Erfindung ist ein der ersten Stirnfläche gegenüberliegendes längsseitiges Ende der Elektromaschine ausgestaltet, sich in eingesetztem Zustand der Elektromaschine zur Positionierung am Getriebegehäuse haltend abzustützen. Mit anderen Worten kann eine mechanische Stabilisierung oder Befestigung des Elektromotors dadurch erfolgen, dass beispielsweise ein Vorsprung oder eine Auswölbung einer Elektromaschinenaußenfläche so ausgestaltet ist, dass sie in eine entsprechend korrespondierende Struktur am Getriebegehäuse eingreift und so einen stabilen Sitz der Elektromaschine im Getriebegehäuse ermöglicht und ein Verrutschen oder Bewegen der Elektromaschine somit verhindert.

In einem Beispiel weist die Elektromaschine eine im Wesentlichen zylinderförmige Gestalt auf und ist mit einer ersten Stirnfläche der zylinderförmigen Elektromaschine mit dem Getriebegehäuse am Umfang der Stirnfläche verschraubt und ist weiterhin am gegenüberliegenden Ende der Elektromaschine durch Eingreifen eines Teils der Elektromaschine in eine Struktur am Getriebegehäuse abgestützt. Somit kann vorteilhaft eine Befestigung des zweiten Endes der Elektromaschine erfolgen, ohne dass eine direkte örtliche Zugänglichkeit, beispielsweise für Werkzeuge, gegeben sein muss.

In der Erfindung weist die Elektromotoreneinheit weiterhin ein Elektromotorengehäuse auf, wobei das Elektromotorengehäuse zumindest den Stator und den Rotor umschließt. Dies kann den Vorteil haben, dass wesentliche Komponenten der Elektromotoreneinheit mechanisch geschützt sind und weiterhin ein Transportieren und Handling der Elektromotoreneinheit als Ganzes erfolgen kann. Weiterhin kann ein Grad der Schmierung unabhängig von einem Schmieren des Getriebes gesteuert werden, beispielsweise durch definierte Öffnungen oder Ventile im Getriebegehäuse. In einem Beispiel ist das Elektromotorengehäuse ein Stahlblechgehäuse.

In einer Ausführungsform der Erfindung ist das Elektromotorengehäuse zur Wärmekopplung mit dem Getriebegehäuse konturnah von einem Teilbereich des Getriebegehäuses umgeben. Die von der Elektromotoreneinheit erzeugte Wärme kann somit vorteilhafterweise über das Getriebegehäuse abtransportiert werden, was einen Aufwand zur Kühlung der Elektromotoreneinheit verringern kann.

In einer Ausführungsform der Erfindung weist das Elektromotorengehäuse eine stirnseitige Abdeckung auf, wobei an der stirnseitigen Abdeckung zumindest ein Teil des Getriebes angeordnet ist. Mit anderen Worten dient ein Teil des Elektromotorengehäuses gleichzeitig zur Aufnahme von Komponenten des Getriebes, was einen Platzbedarf der gesamten Antriebseinheit verringern kann. In einem Beispiel sind in der stirnseitigen Abdeckung Kugellager des Getriebes zur Aufnahme von Getriebewellen angeordnet.

In einer Ausführungsform der Erfindung weist die Elektromotoreneinheit weiterhin eine Sensoreinheit zur Steuerung der Elektromotoreneinheit auf. Eine solche Sensoreinheit kann beispielsweise Umdrehungsgeschwindigkeiten oder eine Position der Antriebswelle des Rotors erfassen und an eine zentrale Steuereinheit weitergeben. Darüber hinaus können weitere Steuergrößen wie beispielsweise Temperatur oder Druck ermittelt werden.

### Kurze Beschreibung der Zeichnungen

Im Folgenden werden Ausführungsbeispiele der Erfindung mit Bezug auf die beiliegenden Figuren detailliert beschrieben. Weder die Beschreibung noch die Figuren sollen als die Erfindung einschränkend ausgelegt werden.
Fig. 1 zeigt ein erstes Beispiel einer Antriebseinheit für ein Kraftfahrzeug gemäß einer Ausführungsform der Erfindung in Längsschnittdarstellung.
Fig. 2 zeigt ein zweites Beispiel einer Antriebseinheit für ein Kraftfahrzeug gemäß einer Ausführungsform der Erfindung in Längsschnittdarstellung mit einem in der stirnseitigen Abdeckung angeordneten Kugellager.

Die Zeichnungen sind lediglich schematisch und nicht maßstabsgetreu. Grundsätzlich sind identische oder ähnliche Teile mit den gleichen Bezugszeichen versehen.

### Ausführungsformen der Erfindung

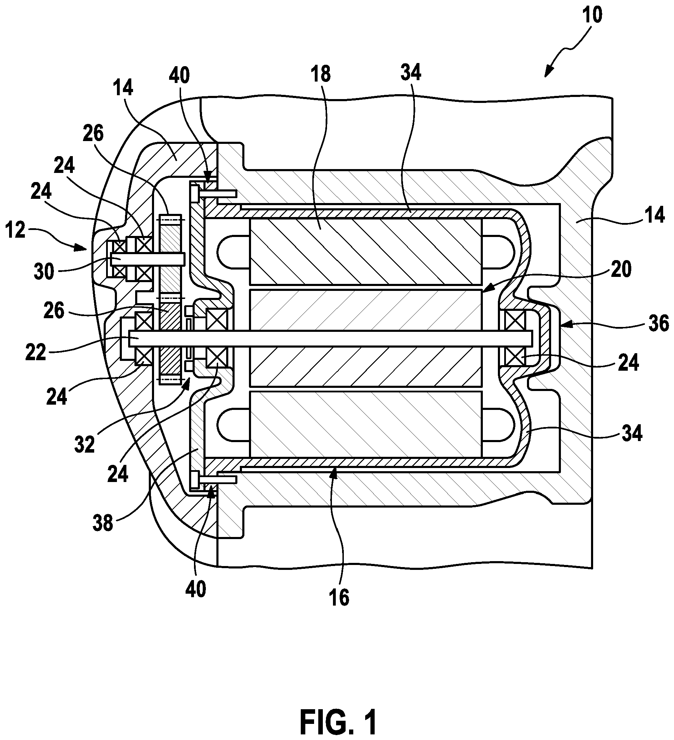

Fig. 1 zeigt ein erstes Beispiel einer Antriebseinheit 10 eines Kraftfahrzeugs mit einem Getriebe 12, einem Getriebegehäuse 14 und einer Elektromotoreneinheit 16. Die Elektromotoreneinheit 16 weist einen Stator 18 und einen Rotor 20 auf. Der Rotor 20 weist eine Antriebswelle 22 auf, die in Längsrichtung durch den Rotor 20 und die Elektromotoreneinheit 16 hindurchgeführt ist. Die Antriebswelle 22 ist in Lagern 24 gelagert. Auf der Antriebswelle 22 ist ein Zahnrad 26 angebracht, das wiederum mit einem weiteren Zahnrad 26 des Getriebes 12 gekoppelt ist. Das Getriebe 12 enthält weitere Getriebewellen 30 und entsprechende Lager 24 zur Umsetzung der Getriebefunktionalität. Auf der Antriebswelle 22 kann weiterhin eine Sensoreinheit 32 angebracht sein, um beispielsweise Umdrehungsgeschwindigkeiten oder Wellenpositionen zu bestimmen.

Die Elektromotoreneinheit 16 ist von einem Elektromotorengehäuse 34 umgeben, das beispielsweise ein Stahlblechgehäuse sein kann. Das Elektromotorengehäuse 34 kann Öffnungen aufweisen, die ein kontrolliertes Einfließen von Schmiermittel in den Bereich des Stators 18 und des Rotors 20 erlauben können. Ein Abstützbereich 36 ist so ausgestaltet, dass die zum Getriebegehäuse 14 gerichtete Seite der Elektromotoreneinheit 16 so ausgeformt ist, dass er in eine korrespondierend ausgestaltete Wandstruktur des Getriebegehäuses 14 haltend eingreift. Der Abstützbereich 36 ist beispielsweise zapfenförmig oder kegelförmig ausgeführt und reicht in eine hohlzylinder- oder hohlkegelförmige Ausnehmung des Getriebegehäuses 14 hinein. Der Abstützbereich 36 und seine korrespondierende Ausnehmung im Getriebegehäuse 14 sind zentrisch zur Antriebswelle 22 angeordnet.
Im hier gezeigten Beispiel ist das Elektromotorengehäuse 34 im Abstützbereich 36 konisch ausgeformt, so dass ein fester Sitz in einer entsprechenden mit Vorsprüngen ausgestalteten Getriebegehäusewand in eingeschraubtem Zustand der Elektromotoreneinheit 16 verklemmt werden kann. Außerdem wird durch die kegelförmige Ausführung des Abstützbereiches 36 und/oder der korrespondierenden Ausnehmung im Getriebegehäuse 14 wird eine gute Zentrierung der Elektromotoreneinheit 16 in dem Getriebegehäuse 14 erreicht.

Das Gehäuse der Elektromotoreneinheit 16 ist zylinderförmig ausgeführt und weist einen Topfabschnitt auf, der mittels einer Abdeckung 38 verschlossen ist. Der Topfabschnitt hat an seiner der Abdeckung 38 zugewandten Stirnseite einen Flanschabschnitt, an dem die Abdeckung 38 anliegt. Der Flanschabschnitt wiederum liegt an einem Absatz des Getriebesgehäuses 14 an. Die Abdeckung 38 ist beispielsweise als Stahlblech ausgeführt.

Die Abdeckung 38 ist zusammen mit dem Elektromotorengehäuse 34 mit einer Schraubverbindung 40 am Getriebegehäuse 14 befestigt. Diese Schraubverbindungen 40 können am Umfang entlang einer Kante der Stirnseite der Elektromotoreneinheit 16 bzw. des Elektromotorengehäuses 34 angeordnet sein. Die Abdeckung 38 stellt eine Trennung zwischen dem räumlichen Bereich des Getriebes 12 und dem Bereich der Elektromotoreneinheit 16 dar. Durch diese Trennung kann beispielsweise bei einem möglichen Defekt der Elektromotoreneinheit 16 diese als Ganze ausgetauscht werden, indem die Schraubverbindungen 40 gelöst werden und die Elektromotoreneinheit als Ganzes aus dem Getriebegehäuse 14 entnommen werden kann und entsprechend ersetzt werden kann.

Ein Vorteil kann in einer vollständigen Prüfbarkeit der Elektromotoreneinheit 16 vor dem Einbau sowie in einer vereinfachten Montage der Antriebseinheit 10 gesehen werden. Durch die Verschraubung der Elektromotoreneinheit 16 mit dem Getriebegehäuse 14 entsteht ein Kraftfluss von der Elektromotoreneinheit 16 über die Verschraubung 40 zum Getriebegehäuse 14.

Innerhalb des Getriebegehäuses 14 kann ein Schmiermittel (nicht gezeigt) eingebracht sein. Dies kann gegebenenfalls auch in den Bereich der Elektromotoreneinheit 16 eingebracht werden und beispielsweise an der Außenseite des Elektromotorengehäuses 34 eine verbesserte Wärmekopplung hin zum Getriebegehäuse 14 ermöglichen. Weiterhin kann das Schmiermedium kontrolliert in bestimmte Bereiche der Elektromotoreneinheit 16 geleitet werden, um dort eine Schmierung der beweglichen Elemente zu ermöglichen.

In einem Beispiel kann die Elektromotoreneinheit einen Querpressverband zwischen dem Gehäuse der Elektromotoreneinheit und dem Blechpaket des Stators aufweisen. Der Stator kann auch anderweitig in dem Blechgehäuse fixiert werden. In einem weiteren Beispiel kann die mechanische Verbindung zwischen Stator und Blechgehäuse kraftschlüssig mittels Querpressverband erzeugt werden. Dies kann den Vorteil haben, dass zusätzliche Bauteile vermieden werden können.

Durch den gezeigten Gesamtaufbau kann die gesamte Antriebseinheit 10 mit dem Getriebe 12 und der Elektromotoreneinheit 16 durch das Getriebegehäuse 14 hermetisch abgeschlossen werden. Dies kann beispielsweise über geeignete, sich gegenüberliegende Dichtflächen (nicht gezeigt) geschehen, die gegebenenfalls durch zusätzliche Dichtungen ergänzt sein können.

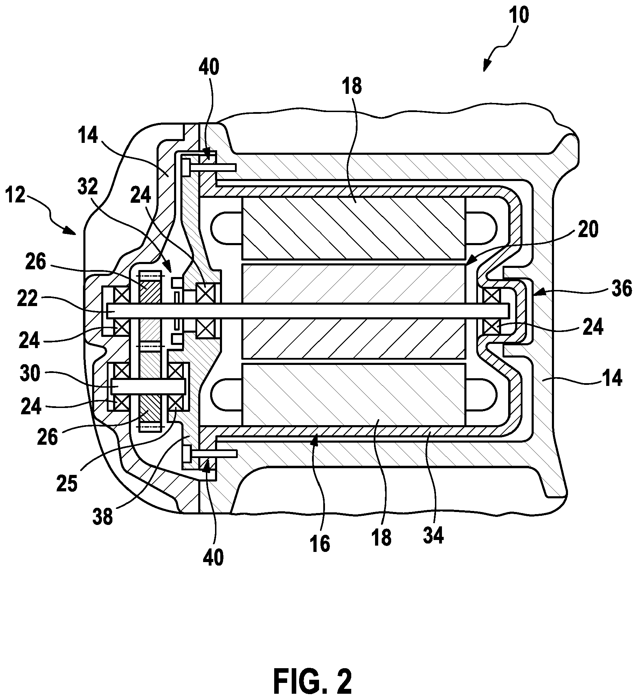

In Fig. 2 ist ein weiteres Ausführungsbeispiel einer Antriebseinheit 10 in einer Längsschnittdarstellung gezeigt. Die hier gezeigte Antriebseinheit entspricht in ihren wesentlichen Elementen sowie in ihrem grundsätzlichen Aufbau der Darstellung der Antriebsmaschine 10 aus Fig. 1.

Ein wichtiger Unterschied zwischen der hier gezeigten Antriebseinheit und der Darstellung in Fig. 1 besteht in der Anordnung eines Lagers 25 an der stirnseitigen Abdeckung 38. Hierbei ist das Lager 25 derart in eine außenseitige Oberflächenstruktur der Abdeckung 38 eingebracht, dass es ein Ende einer Getriebewelle 30 aufnehmen kann. Dies kann beispielsweise durch Einpressen des Kugellagers 25 in eine vorbereitete Oberflächenstruktur der Abdeckung 38 geschehen. Ein Vorteil besteht insbesondere in einer Reduzierung einer axialen Baulänge der Antriebseinheit 10. Mit anderen Worten wird die Abdeckung 38 sowohl für das Abdecken eines Innenraumes der Elektromotoreneinheit 16 als auch für die Aufnahme eines Lagers 25 auf der zum Getriebe 12 gerichteten Seite der Abdeckung 38 verwendet.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Antriebseinheit (10) für ein Kraftfahrzeug, aufweisend
ein Getriebe (12);
ein Getriebegehäuse (14);
eine Elektromotoreneinheit (16) mit einem Stator (18) und einem Rotor (20); wobei das Getriebegehäuse (14) einen Innenraum aufweist,
wobei das Getriebe (12) in dem Innenraum aufgenommen ist;
wobei die Elektromotoreneinheit (16) in dem Innenraum des Getriebegehäuses (14) angeordnet ist und das Getriebe (12) derart ausgestaltet ist, dass die Elektromotoreneinheit (16) mit einem Antriebsstrang des Kraftfahrzeuges koppelbar ist, **dadurch gekennzeichnet, dass** die Elektromotoreneinheit (16) ein Elektromotorengehäuse (34) aufweist, das zumindest den Stator (18) und den Rotor (20) umschließt, dass das Elektromotorengehäuse (34) mit einer ersten Stirnfläche der Elektromaschineneinheit (16) am Getriebegehäuse (14) befestigt ist, und dass ein der ersten Stirnfläche gegenüberliegendes Ende des Elektromotorengehäuses (34) mittels eines konusförmigen Abstützbereiches (36) an einer Ausnehmung des Getriebegehäuses (14) haltend abgestützt ist.

2. Antriebseinheit (10) gemäß Anspruch 1, wobei die Elektromotoreneinheit (16) als Einheit arbeitsfähig und als Einheit aus dem Getriebegehäuse (14) entnehmbar ist.

3. Antriebseinheit (10) gemäß einem der vorhergehenden Ansprüche, wobei das Innere des Getriebegehäuses (14) ein Schmiermedium zum Schmieren des Getriebes (12) aufweist; und wobei das Getriebegehäuse (14) und die Elektromotoreinheit (16) derart ausgestaltet sind, dass ein Schmieren der Elektromotoreneinheit (16) mithilfe des Schmiermediums erfolgt.

4. Antriebseinheit (10) gemäß Anspruch 3, wobei das Getriebegehäuse (14) und die Elektromotoreinheit (16) derart ausgestaltet sind, dass das Schmiermedium der Elektromotoreneinheit (16) in axialer Richtung des Rotors (20) zugeführt wird.

5. Antriebseinheit (10) gemäß Anspruch 1, wobei das Elektromotorengehäuse (34) zur Wärmekopplung mit dem Getriebegehäuse (14) konturnah von einem Teilbereich des Getriebegehäuses (14) umgeben ist.

6. Antriebseinheit (10) gemäß Anspruch 1 oder 5, wobei das Elektromotorengehäuse (34) eine stirnseitige Abdeckung (38) aufweist; wobei an der stirnseitigen Abdeckung (38) zumindest ein Teil des Getriebes (12) angeordnet ist.

7. Antriebseinheit (10) gemäß einem der vorhergehenden Ansprüche, wobei die Elektromotoreneinheit (16) weiterhin eine Sensoreinheit (32) zur Steuerung der Elektromotoreneinheit (16) aufweist.

## Claims

1. Drive unit (10) for a motor vehicle, having
a transmission (12);
a transmission housing (14);
an electric motor unit (16) comprising a stator (18) and a rotor (20);
wherein the transmission housing (14) has an internal space,
wherein the transmission (12) is accommodated in the internal space;
wherein the electric motor unit (16) is arranged in the internal space of the transmission housing (14) and the transmission (12) is configured in such a way that the electric motor unit (16) can be coupled to a drive train of the motor vehicle,
**characterized in that**
the electric motor unit (16) has an electric motor housing (34) which encloses at least the stator (18) and the rotor (20), **in that** the electric motor housing (34) is fastened, by way of a first end face of the electrical machine unit (16), to the transmission housing (14), and **in that** one end of the electric motor housing (34), which end is situated opposite the first end face, is supported by means of a conical supporting region (36) such that it is held at a recess of the transmission housing (14).

2. Drive unit (10) according to Claim 1, wherein the electric motor unit (16) can operate as a unit and can be removed from the transmission housing (14) as a unit.

3. Drive unit (10) according to either of the preceding claims, wherein the interior of the transmission housing (14) contains a lubricating medium for lubricating the transmission (12), and wherein the transmission housing (14) and the electric motor unit (16) are configured in such a way that the electric motor unit (16) is lubricated with the aid of the lubricating medium.

4. Drive unit (10) according to Claim 3, wherein the transmission housing (14) and the electric motor unit (16) are configured in such a way that the lubricating medium is supplied to the electric motor unit (16) in the axial direction of the rotor (20).

5. Drive unit (10) according to Claim 1, wherein the electric motor housing (34), for thermal coupling to the transmission housing (14), is surrounded by a subregion of the transmission housing (14) close to the contour.

6. Drive unit (10) according to Claim 1 or 5, wherein the electric motor housing (34) has an end-side cover (38), wherein at least a portion of the transmission (12) is arranged on the end-side cover (38).

7. Drive unit (10) according to one of the preceding claims, wherein the electric motor unit (16) further has a sensor unit (32) for controlling the electric motor (16).

## Revendications

1. Ensemble moteur (10) destiné à un véhicule automobile, comportant :
une boîte de vitesses (12) ;
un carter de boîte de vitesses (14) ;
un ensemble moteur électrique (16) pourvu d'un stator (18) et d'un rotor (20) ;
le carter de boîte de vitesses (14) comportant un espace intérieur,
la boîte de vitesses (12) étant logée dans l'espace intérieur ;
l'ensemble moteur électrique (16) étant placé dans l'espace intérieur du carter de boîte de vitesses (14) et la boîte de vitesses (12) étant conçue de telle sorte que l'ensemble moteur électrique (16) soit susceptible d'être couplé sur une chaîne cinématique du véhicule automobile,
**caractérisé en ce que** l'ensemble moteur électrique (16) comporte un carter de moteur électrique (34) qui entoure au moins le stator (18) et le rotor (20), **en ce que** le carter de moteur électrique (34) est fixé par une première face frontale de l'ensemble moteur électrique (16) sur le carter de boîte de vitesses (14) et **en ce qu'**une extrémité du carter de moteur électrique (34) placée à l'opposé de la première face frontale s'appuie en maintien au moyen d'une zone d'appui (36) conique sur un évidement du carter de boîte de vitesses (14).

2. Ensemble moteur (10) selon la revendication 1, l'ensemble moteur électrique (16) étant opérationnel en tant qu'ensemble et susceptible d'être retiré en tant qu'ensemble hors du carter de boîte de vitesses (14).

3. Ensemble moteur (10) selon l'une quelconque des revendications précédentes, l'intérieur du carter de boîte de vitesses (14) comportant un agent lubrifiant, destiné à lubrifier la boîte de vitesses (12) ; et le carter de boîte de vitesses (14) et l'ensemble moteur électrique (16) étant conçus de telle sorte qu'il s'effectue une lubrification de l'ensemble moteur électrique (16) à l'aide de l'agent lubrifiant.

4. Ensemble moteur (10) selon la revendication 3, le carter de boîte de vitesses (14) et l'ensemble moteur électrique (16) étant conçus de telle sorte que l'agent lubrifiant soit alimenté à l'ensemble moteur électrique (16) dans la direction axiale du rotor (20).

5. Ensemble moteur (10) selon la revendication 1, pour le couplage thermique avec le carter de boîte de vitesses (14), le carter de moteur électrique (34) étant entouré à proximité de son contour par une zone partielle du carter de boîte de vitesses (14).

6. Ensemble moteur (10) selon la revendication 1 ou 5, le carter de moteur électrique (34) comportant un recouvrement frontal (38) ; sur le recouvrement frontal (38) étant placée au moins une partie de la boîte de vitesses (12).

7. Ensemble moteur (10) selon l'une quelconque des revendications précédentes, l'ensemble moteur électrique (16) comportant part ailleurs un ensemble capteur (32) destiné à commander l'ensemble moteur électrique (16).
